# EUROPÄISCHE PATENTANMELDUNG

(11) **EP 3 279 485 A1**
(43) Veröffentlichungstag der Anmeldung: **07.02.2018**
(21) Anmeldenummer: 16182683.9
(22) Anmeldetag: 04.08.2016
(51) Int. Cl.: F16B 33/00, E04B 1/76, F16B 33/06, F16B 13/02, F16B 13/00

(54) **DÄMMSTOFFANKER MIT PARTIELLER BESCHICHTUNG**

(71) Anmelder: HILTI Aktiengesellschaft, 9494 Schaan (LI)
(72) Erfinder: Brunhuber, Thomas, 6811 Göfis (AT)
(74) Vertreter: Hilti Aktiengesellschaft Corporate Intellectual Property

(57) **Zusammenfassung**

Die Erfindung betrifft einen Dämmstoffanker mit einer Spreizschraube (6), welche ein Gewinde (63) aufweist, einem Dübelteil (2) aus Kunststoff, welches einen Spreizkanal (26), in dem die Spreizschraube bereichsweise aufgenommen ist, und einen Spreizbereich aufweist, in dem das Dübelteil mittels der Spreizschraube spreizbar ist, und einem Tellerteil (4) mit einem Halteteller (49) zum Halten einer Dämmstoffplatte, wobei das Tellerteil einen Durchgangskanal (41) aufweist, durch den die Spreizschraube durchtritt, wobei die Spreizschraube (6) einen Kopf (65) zur Anlage am Tellerteil aufweist. Erfindungsgemäss ist vorgesehen, dass die Spreizschraube zumindest am Gewinde aus Kunststoff besteht und dass die Spreizschraube zumindest am Gewinde eine Gleitschicht (80) aufweist.

## Beschreibung

Die Erfindung betrifft einen Dämmstoffanker gemäss dem Oberbegriff des Anspruchs 1. Ein solcher Dämmstoffanker ist ausgestattet mit einer Spreizschraube, welche ein Gewinde aufweist, einem Dübelteil aus Kunststoff, welches einen Spreizkanal, in dem die Spreizschraube bereichsweise aufgenommen ist, und einen Spreizbereich aufweist, in dem das Dübelteil mittels der Spreizschraube spreizbar ist, und einem Tellerteil mit einem Halteteller zum Halten einer Dämmstoffplatte, wobei das Tellerteil einen Durchgangskanal aufweist, durch den die Spreizschraube durchtritt, wobei die Spreizschraube einen Kopf zur Anlage am Tellerteil aufweist.

Die nächstkommende DE 10041299 A1 beschreibt einen axial stauchbaren Dämmstoffanker mit einem in ein Bohrloch einsetzbaren Dübelteil, das zu seinem vorderen Einsatzende hin spreizbar ist, einem davon unabhängigen Tellerteil aus Kunststoff mit einem Halteteller und einer koaxial zum Tellerteil verlaufenden Öffnung, und einer als Spreizelement für das Dübelteil vorgesehenen Spreizschraube, die durch die Öffnung durch das Tellerteil in das Dübelteil einschiebbar und im Tellerteil versenkbar ist, wobei das Tellerteil an das Dübelteil derart angepasst ist, dass das Tellerteil mit Halteteller gegenüber dem Dübelteil teleskopartig verschiebbar ist.

Die EP 2894355 A1 beschreibt einen weiteren zweiteiligen, axial stauchbaren Dämmstoffanker. Aus der EP 2905392 A1 geht ein Dämmstoffanker mit einer Verkürzungszone hervor, die ein axiales Stauchen des Dämmstoffankers ermöglicht.

Die EP 2881599 A1 beschreibt einen Spreizbereich für einen Dämmstoffanker.

Aufgabe der Erfindung ist es, einen Dämmstoffanker anzugeben, der bei geringem Herstellungsaufwand und geringem Montageaufwand besonders leistungsfähig und zuverlässig ist.

Die Aufgabe wird erfindungsgemäss durch einen Dämmstoffanker mit den Merkmalen des Anspruchs 1 gelöst. Bevorzugte Ausführungsformen sind in den abhängigen Ansprüchen angegeben.

Erfindungsgemäss ist vorgesehen, dass die Spreizschraube zumindest am Gewinde aus Kunststoff besteht und dass die Spreizschraube zumindest am Gewinde eine Gleitschicht aufweist.

Ein erster Gedanke der Erfindung liegt darin, in einem stauchbaren Dämmstoffanker eine Spreizschraube aus Kunststoff zu verwenden, was zur Vermeidung von Wärmebrücken am gesetzten Anker vorteilhaft sein kann. Bei der Verwendung solcher Kunststoff-Spreizschrauben wurde nun in überraschender Weise beobachtet, dass die Auszuglasten des Dämmstoffankers aus dem Untergrund unter Umständen hinter den theoretischen Erwartungen zurückbleiben können. Im Rahmen der Erfindung konnte diese Beobachtung unter anderem folgendermassen erklärt werden: Damit ein gattungsgemässer stauchbarer Dämmstoffanker ohne übermässige Verdichtung der - in der Regel leicht komprimierbaren - Dämmstoffplatte vorzugsweise bündig an der Dämmstoffplatte gesetzt werden kann, ist eine besonders genaue Dosierung des Einschraubwegs der Spreizschraube erforderlich, da dieser Einschraubweg schlussendlich die Stauchung des Dämmstoffankers bewirkt. Daher sind bei Spreizschrauben, welche in gattungsgemässen stauchbaren Dämmstoffankern zum Einsatz kommen, in der Regel relativ geringe Gewindesteigungen am Gewinde erforderlich. Die relativ geringen Gewindesteigungen haben aber nun relativ enge Gewindeprofile und damit relativ hohe Gewindevolumen zur Folge. Aufgrund dieser hohen Gewindevolumen kann beim Einschrauben der Spreizschrauben aber vergleichsweise viel Reibungswärme am jeweiligen Gewinde freiwerden und/oder diese Wärme kann relativ schlecht abgeführt werden. Diese Wärme kann nun aber das Dübelteil und/oder die Spreizschraube, welche beide aus Kunststoff bestehen, belasten und unter Umständen auch plastisch deformieren oder gar anschmelzen, was zu den beobachteten Beeinträchtigungen der Leistungsfähigkeit der Dämmstoffanker führen kann.

An dieser Erkenntnis setzt die Erfindung an und sieht vor, das Kunststoff-Gewinde der Spreizschraube gezielt mit einer Gleitschicht zu versehen. Diese Gleitschicht reduziert die Reibung zwischen Gewinde und Spreizbereich im Vergleich zu einem unbeschichteten Gewinde. Daher kann sie die zwischen Gewinde und Spreizbereich anfallende Wärmemenge reduzieren. Das Dübelteil und die Spreizschraube können somit in einfacher und zuverlässiger Weise thermisch entlastet werden und die Leistungsfähigkeit des Dämmstoffankers entsprechend gesteigert werden, und dies obwohl die Applikation an einem gattungsgemässen stauchbaren Dämmstoffanker wie oben erläutert nur vergleichsweise geringe Freiheitsgrade bei der Gestaltung des Gewindes zulässt, so dass beispielsweise Wärmeleitstrukturen nicht uneingeschränkt möglich sind. Folglich wird ein Dämmstoffanker erhalten, der bei geringem Herstellungsaufwand besonders leistungsfähig und zuverlässig ist.

Der Spreizkanal dient zur Führung der Spreizschraube im Dübelteil. Im Spreizbereich ist das Dübelteil spreizbar, und zwar insbesondere durch tieferes Einschrauben der Spreizschraube in den Spreizkanal, vorzugsweise so weit, dass die Spreizschraube an ihrem vorderen Ende in den Spreizbereich gelangt. Insbesondere kann der Spreizkanal im Spreizbereich einen verringerten Querschnitt aufweisen. Der Spreizbereich kann beispielsweise wie in der EP 2881599 A1 beschrieben ausgeführt sein. Vorzugsweise ist der Spreizkanal versetzt zum Spreizbereich so querschnittsgross, dass dort keine Aufweitung des Dübelteils durch die Spreizschraube stattfindet. Der Spreizkanal kann auch eine oder mehrere von der Spreizschraube durchstossbare Membranen aufweisen.

Der Kopf der Spreizschraube kann, vorzugsweise am Ende des Setzvorgangs, am Tellerteil zur Anlage kommen, so dass eine Übertragung von Zugkräften vom Tellerteil auf die Spreizschraube möglich ist. Bei gesetztem Anker werden also über die Spreizschraube Zugkräfte vom Tellerteil, insbesondere von dessen Halteteller, auf die Spreizschraube und von dieser wiederum auf den Spreizbereich des Dübelteils, welcher im Substrat verankert ist, übertragen. Damit kann die am Tellerteil anliegende Dämmstoffplatte am Substrat gesichert werden. Um am Tellerteil zur Anlage kommen zu können, weist der Kopf zweckmässigerweise zumindest bereichsweise einen grösseren Querschnitt auf als der Durchgangskanal im Tellerteil. Insbesondere kann vorgesehen sein, dass der Kopf auf Höhe des Haltetellers am Tellerteil zur Anlage kommt, was im Hinblick auf den Kraftfluss besonders vorteilhaft sein kann.

Das Gewinde erstreckt sich zweckmässigerweise lediglich über einen Teil der Höhe der Schraube. Insbesondere kann das Gewinde zumindest bereichsweise in einem vorderen Bereich der Spreizschraube angeordnet sein. Zweckmässigerweise ist zumindest ein Teil des vorderen Bereichs der Spreizschraube im Spreizkanal aufgenommen. Vorzugsweise ist ein mittlerer Bereich der Schraube zwischen dem Gewinde und dem Kopf gewindefrei ausgebildet.

Um eine besonders genaue Dosierung des Einschraubwegs der Spreizschraube zu ermöglichen, kann das Gewinde insbesondere ein Feingewinde sein. Insbesondere kann der Steigungswinkel des Gewindes kleiner als 10° sein und vorzugsweise etwa 5° betragen.

Vorzugsweise besteht die Spreizschraube zur Gänze aus Kunststoff, das heisst vorzugsweise ist der Kunststoff nicht auf das Gewinde beschränkt. Dies kann die Herstellung noch weiter vereinfachen. Insbesondere kann die Spreizschraube monolithisch, das heisst insbesondere ohne Fügestelle, ausgeführt sein. Unter einem Kunststoff kann in fachüblicher Weise insbesondere ein Werkstoff verstanden werden, der hauptsächlich aus Makromolekülen besteht.

Die Gleitschicht dient der Reibungsminderung, insbesondere der Minderung der Reibung zwischen Spreizschraube und Dübelteil. Demgemäss weist eine Spreizschraube, die mit der erfindungsgemässen Gleitschicht versehen ist, also insbesondere geringere Reibungskoeffizienten mit dem Dübelteil auf als dieselbe Spreizschraube ohne Gleitschicht. Insbesondere weist die Gleitschicht eine andere chemische Zusammensetzung auf als die Spreizschraube, insbesondere an deren Gewinde.

Grundsätzlich kann vorgesehen sein, dass sich die Gleitschicht über die gesamte Spreizschraube erstreckt. Besonders bevorzugt ist es jedoch, dass die Gleitschicht in einem mittleren Bereich der Spreizschraube und/oder vor dem Kopf der Spreizschraube endet. Hierdurch kann in besonders einfacher und zuverlässiger Art und Weise eine Bremszone geschaffen werden, die einem zu tiefen Einschrauben der Spreizschraube und somit einem zu tiefen Einziehen des Tellerteils in die Dämmstoffplatte entgegenwirkt. Hierdurch kann ein besonders gutes Setzbild erhalten werden. Der mittlere Bereich der Spreizschraube kann insbesondere vom Gewinde bis zum Kopf der Spreizschraube reichen. Ein Ende der Gleitschicht vor dem Kopf der Spreizschraube kann auch herstellungstechnische Vorteile haben. Der mittlere Bereich, in dem die Gleitschicht endet, kann vorzugsweise gewindefrei ausgebildet sein. Er kann aber auch ein Bremsgewinde aufweisen.

Besonders bevorzugt ist es, dass sich die Gleitschicht über das gesamte Gewinde erstreckt. Hierdurch kann der erfindungsgemässe Effekt der Verringerung der anfallenden Wärmemenge besonders zuverlässig realisiert werden.

Auch das Tellerteil besteht vorzugsweise aus Kunststoff. Vorzugsweise besteht das Dübelteil aus Polyethylen (PE), womit eine besonders gute Verformbarkeit, insbesondere im Spreizbereich, erhalten werden kann. Das Tellerteil besteht vorzugsweise aus Polypropylen (PP). Die Spreizschraube besteht vorzugsweise aus faserverstärktem, insbesondere glasfaserverstärktem, Polyamid oder aus faserverstärktem, insbesondere glasfaserverstärktem, Polypropylen (PP). Beispielsweise kann eine 50% Glasfaserverstärkung vorgesehen sein. Dies kann im Hinblick auf die Fähigkeit zur Drehmomentübertragung vorteilhaft sein.

Die Gleitschicht ist vorzugsweise ein Trockengleitfilm, was hinsichtlich der Handhabung vorteilhaft sein kann. Sie kann insbesondere hochmolekulare Polymere und/oder Polytetrafluorethylen enthalten.

Beispielsweise können das Tellerteil und das Dübelteil monolithisch ausgeführt sein. Um eine Stauchung des Dämmstoffankers beim Setzen zu gewährleisten, kann, insbesondere im Fall einer monolithischen Ausgestaltung, beispielsweise eine Verkürzungszone vorgesehen sein, insbesondere im Dübelteil. Eine solche Verkürzungszone kann als lokale Materialschwächung ausgebildet sein, welche die Stauchung des Dämmstoffankers gezielt aufnimmt.

Besonders bevorzugt ist es jedoch, dass das Tellerteil und das Dübelteil zwei separate Teile sind, das heisst dass das Tellerteil und das Dübelteil nicht-monolithisch ausgebildet sind. Dies kann herstellungstechnisch und im Hinblick auf die Lagerhaltung vorteilhaft sein, beispielsweise weil ein Typ Tellerteil mit unterschiedlichen Typen, insbesondere Längentypen, Dübelteil kombiniert werden kann und umgekehrt. Vorzugsweise können das Dübelteil und das Tellerteil teleskopierbar ausgebildet sein, wodurch in besonders einfacher, robuster und zuverlässiger Weise eine Stauchung des Dämmstoffankers beim Setzen ermöglicht werden kann. Besonders zweckmässig ist dies in dem Fall, wenn das Tellerteil und das Dübelteil zwei separate Teile sind. Besonders vorteilhaft ist es, dass das Dübelteil bereichsweise im Durchgangskanal des Tellerteils angeordnet ist. Hierdurch kann ein besonders leistungsfähiger, einfach herzustellender und zuverlässiger Dämmstoffanker gegeben sein.

Sofern das Tellerteil und das Dübelteil nicht-monolithisch ausgebildet sind, liegen diese Teile vorzugsweise aneinander an und sind besonders bevorzugt unmittelbar miteinander verbunden. Hierdurch kann ein besonders robuster Dämmstoffanker erhalten werden. Insbesondere kann das Dübelteil mittels des Tellerteils im Bohrloch positioniert werden.

Eine weitere bevorzugte Ausgestaltung der Erfindung liegt darin, dass der Kopf der Spreizschraube einen Bund, insbesondere einen Ringbund, aufweist, der zur Anlage am Tellerteil querschnittsgrösser als der Durchgangskanal im Tellerteil ist. In diesem Fall kann ein besonders hoher Kopf vorgesehen werden, wobei beim Setzen des Dämmstoffankers ein Teil des Kopfes in den Spreizkanal eintreten kann, ohne am Tellerteil anzuliegen, bis dann schliesslich der Bund am Tellerteil zur Anlage kommt. Dies kann im Hinblick auf die Kraftaufnahme vorteilhaft sein.

Besonders bevorzugt ist es, dass der Kopf der Spreizschraube, insbesondere an seiner hinteren Stirnseite, einen Antrieb zum Aufbringen eines Drehmoments auf die Spreizschraube aufweist. Dieser Antrieb kann vorzugsweise als Innenmehrkant oder Innenmehrrund, aber grundsätzlich auch als Schlitz ausgeführt sein. Sofern der Kopf einen oben beschrieben Bund aufweist, kann der Innenmehrkant bzw. Innenmehrrund für eine gute Kraftaufnahme besonders tief ausgeführt werden.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figur 1:: eine Längsschnittansicht eines erfindungsgemässen Dämmstoffankers; und
- Figur 2:: eine Seitenansicht der Spreizschraube des Dämmstoffankers der Figur 1.

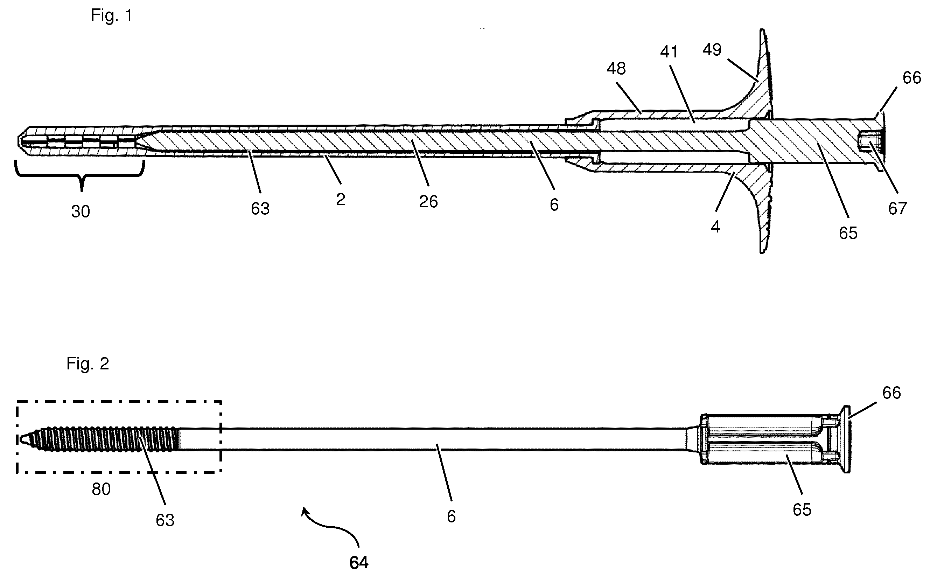

Figur 1 zeigt ein Ausführungsbeispiel eines erfindungsgemässen Dämmstoffankers im zusammengefügten Zustand. Der Dämmstoffanker weist ein Tellerteil 4 auf, welches aus einem Hülsenteil 48 und einem Halteteller 49 besteht, wobei der Halteteller 49 am rückwärtigen Ende des Hülsenteils 48 angeordnet ist. Der Halteteller 49 ist verglichen mit dem Hülsenteil 48 aussenquerschnittsgrösser und dient zum Sichern einer nicht dargestellten Dämmstoffplatte am Dämmstoffanker. Durch den Halteteller 49 und das Hülsenteil 48 des Tellerteils 4 läuft ein Durchgangskanal 41 in Axialrichtung hindurch, welcher eine Durchgangsöffnung im Tellerteil 4 bildet, das heisst der Durchgangskanal 41 ist sowohl am axial vorderen Ende als auch am axial rückwärtigen Ende des Tellerteils 4 nach aussen hin offen.

Der Dämmstoffanker weist ferner ein schaftartiges Dübelteil 2 auf. Im Inneren des Dübelteils verläuft ein Spreizkanal 26, der sich ausgehend vom axial rückwärtigen Ende des Dübelteils 2 bis in einen Spreizbereich 30 hinein erstreckt, welcher im Bereich des axial vorderen Endes des Dübelteils 2 ausgebildet ist. Im Spreizbereich 30 weist der Spreizkanal 26 Querschnittsverengungen auf, so dass dort das Dübelteil 2 durch Einschrauben der Spreizschraube 6 in den Spreizkanal 26 radial gespreizt werden kann.

Der Dämmstoffanker weist ferner eine Spreizschraube 6 auf, die auch in Figur 2 gezeigt ist. Diese Spreizschraube 6 ist in ihrem vorderen Endbereich mit einem, vorzugsweise als Feingewinde ausgebildetem, Gewinde 63 versehen. In ihrem rückwärtigen Endbereich weist die Spreizschraube 6 einen Kopf 65 auf, der eine Querschnittsvergrösserung bildet. Vorzugsweise an seinem hinteren Endbereich weist der Kopf 65 einen vorzugsweise ringförmigen Bund 66 auf, an dem der Querschnitt des Kopfs maximal ist. Insbesondere ist am Bund 66 der Querschnitt des Kopfes 65 grösser als der Querschnitt des Durchgangskanals 41 des Tellerteils 4, insbesondere auf Höhe des Haltetellers 49. Somit kann der Kopf 65 mit seinem Bund 66 am Tellerteil 4, insbesondere auf Höhe des Haltetellers 49, zur Anlage kommen, so dass dort axiale Zugkräfte vom Tellerteil 4 auf die Spreizschraube 6 übertragbar sind. An ihrer rückwärtigen Stirnseite, insbesondere am Kopf 65, weist die Spreizschraube 6 einen Antrieb 67 auf, der hier beispielhaft als Sechsrund ausgeführt ist.

Zwischen dem Gewinde 63 und dem Kopf 65 weist die Spreizschraube 6 einen mittleren Bereich 64 auf, der vorzugsweise gewindefrei ist, das heisst in dem die Spreizschraube 6 kein nennenswertes Gewinde aufweist, und in dem die Spreizschraube 6 vorzugsweise einen zumindest annähernd zylindrischen Aussenquerschnitt aufweist.

Bei zusammengefügtem Dämmstoffanker reicht die Spreizschraube 6 durch den Durchgangskanal 41 im Tellerteil 4 hindurch und ihr vorderer Endbereich mit dem Gewinde 63 ist im Inneren des Spreizkanals 26 des Dübelteils 2 angeordnet. Vor dem Setzen des Dämmstoffankers ist dabei das Gewinde 63 zumindest bereichsweise vom Spreizbereich 30 axial beabstandet und der Bund 66 des Kopfes 65 vom Tellerteil 4 axial beabstandet.

Beim Setzen des Dämmstoffankers wird die Spreizschraube 6 mittels eines am Antrieb 67 angreifenden Drehwerkzeugs in Drehung versetzt. Infolge dieser Drehung schraubt sich die Spreizschraube 6 tiefer in den Spreizkanal 26 des Dübelteils 2 ein und das Gewinde 63 gelangt tief in den Spreizbereich 30, wo das Gewinde 63 das Dübelteil 2 radial aufweitet und dabei im Untergrund verankert. Insbesondere wird die Spreizschraube 6 so tief in den Spreizkanal 26 eingeschraubt, bis der Kopf 65 der Spreizschraube 6 am Tellerteil 4 zur Auflage kommt. Beim weiteren Einschrauben wird dann das Tellerteil 4, insbesondere sein Halteteller 49, von der Spreizschraube 6 axial mitgenommen und axial näher an Spreizbereich 30 herangeführt, was zur Stauchung des Dämmstoffankers und zu einer Verspannung des Haltetellers 49 mit der zu sichernden Dämmstoffplatte führt. Um diese Verspannung gezielt dosieren zu können, weist das Gewinde 63 der Spreizschraube 6 eine vergleichsweise geringe Steigung auf.

Im dargestellten Ausführungsbeispiel sind das Tellerteil 4 und das Dübelteil 2 separate Teile. An seinem rückwärtigen Ende reicht das Dübelteil 2 in den Durchgangskanal 41 im Tellerteil 4 und liegt dort im Inneren des Tellerteils 4 am Tellerteil 4 an, so dass ein Verbund zwischen Dübelteil 2 und Tellerteil 4 gegeben ist. Dieser Verbund kann insbesondere dazu dienen, das Dübelteil 2 mittels des Tellerteils 4 zu positionieren. Dübelteil 2 und Tellerteil 4 sind dabei teleskopierbar ausgeführt, so dass wie oben erläutert der Halteteller 49 des Tellerteils 4 an den Spreizbereich 30 des Dübelteils 2 herangeführt werden kann. Grundsätzlich sind auch alternative Ausführungsbeispiele denkbar, bei denen Tellerteil 4 und Dübelteil 2 zumindest vor dem Setzen monolithisch ausgeführt sind. Um in diesem Fall das Heranführen des Tellerteils 4 an das Dübelteil 2 zu ermöglichen, kann beispielsweise im Dübelteil 2 und/oder im Tellerteil 4 eine Verkürzungszone vorgesehen werden, die ein axiales Stauchen des Dämmstoffankers ermöglicht.

Wie insbesondere Figur 2 zeigt, weist die aus Kunststoff bestehende Spreizschraube 6 an ihrem Gewinde 63 eine Gleitschicht 80 auf, die das Gewinde 63 bedeckt, im dargestellten Ausführungsbeispiel auf der gesamten axialen Höhe des Gewindes 63. Diese Gleitschicht 80 wirkt einer übermässigen Wärmeentwicklung beim Einschrauben des aufgrund seiner geringen Steigung relativ grossvolumigen Gewindes 63 in den Spreizbereich 30 des aus Kunststoff bestehenden Dübelteils 2 entgegen. Vorzugsweise bedeckt die Gleitschicht 80 jedoch nicht die gesamte Spreizschraube 6 sondern endet, insbesondere vor dem Kopf 65, im mittleren Bereich 64 der Spreizschraube 6. Hierdurch kann eine Bremszone definiert werden, welche einem übermässigen Heranführen des Tellerteils 4 an den Spreizbereich 30 und somit einer übermässigen Kompression der Dämmstoffplatte entgegenwirkt. Insbesondere kann die Gleitschicht 80 auf das Gewinde 63 beschränkt sein.

## Patentansprüche

1. Dämmstoffanker mit
- einer Spreizschraube (6), welche ein Gewinde (63) aufweist,
- einem Dübelteil (2) aus Kunststoff, welches einen Spreizkanal (26), in dem die Spreizschraube (6) bereichsweise aufgenommen ist, und einen Spreizbereich (30) aufweist, in dem das Dübelteil (2) mittels der Spreizschraube (6) spreizbar ist, und
- einem Tellerteil (4) mit einem Halteteller (49) zum Halten einer Dämmstoffplatte, wobei das Tellerteil (4) einen Durchgangskanal (41) aufweist, durch den die Spreizschraube (6) durchtritt,
- wobei die Spreizschraube (6) einen Kopf (65) zur Anlage am Tellerteil (4) aufweist,
**dadurch gekennzeichnet,**
- **dass** die Spreizschraube (6) zumindest am Gewinde (63) aus Kunststoff besteht und dass die Spreizschraube (6) zumindest am Gewinde (63) eine Gleitschicht (80) aufweist.

2. Dämmstoffanker nach Anspruch 1,
**dadurch gekennzeichnet,**
**dass** die Gleitschicht (80) in einem mittleren Bereich (64) der Spreizschraube (6) und/oder vor dem Kopf (65) der Spreizschraube (6) endet.

3. Dämmstoffanker nach einem der vorstehenden Ansprüche,
**dadurch gekennzeichnet,**
**dass** sich die Gleitschicht (80) über das gesamte Gewinde (63) erstreckt.

4. Dämmstoffanker nach einem der vorstehenden Ansprüche,
**dadurch gekennzeichnet,**
**dass** das Dübelteil (2) aus Polyethylen,
**dass** das Tellerteil (4) aus Polypropylen, und/oder
**dass** die Spreizschraube (6) aus faserverstärktem Polyamid besteht.

5. Dämmstoffanker nach einem der vorstehenden Ansprüche,
**dadurch gekennzeichnet,**
**dass** die Gleitschicht (80) ein Trockengleitfilm ist.

6. Dämmstoffanker nach einem der vorstehenden Ansprüche,
**dadurch gekennzeichnet,**
**dass** das Dübelteil (2) und das Tellerteil (4) teleskopierbar ausgebildet sind, und dass das Dübelteil (2) bereichsweise im Durchgangskanal (41) des Tellerteils (4) angeordnet ist.

7. Dämmstoffanker nach einem der vorstehenden Ansprüche,
**dadurch gekennzeichnet,**
**dass** der Kopf (65) der Spreizschraube (6) einen Bund (66) aufweist, der zur Anlage am Tellerteil (4) querschnittsgrösser als der Durchgangskanal (41) im Tellerteil (4) ist.

8. Dämmstoffanker nach einem der vorstehenden Ansprüche,
**dadurch gekennzeichnet,**
**dass** der Kopf (65) der Spreizschraube (6) einen Antrieb (67) zum Aufbringen eines Drehmoments auf die Spreizschraube (6) aufweist.
